# EUROPÄISCHE PATENTANMELDUNG

(11) **EP 0 886 262 A2**
(43) Veröffentlichungstag der Anmeldung: **23.12.1998**
(21) Anmeldenummer: 98110394.8
(22) Anmeldetag: 06.06.1998
(51) Int. Cl.: G10K 11/178, F16L 55/033

(54) **Verfahren zur Lärmminderung schallführender Medien in Rohrleitungen**

(30) Priorität: 19.06.1997 DE 19726024
(71) Anmelder: DORNIER GmbH, 88039 Friedrichshafen (DE)
(72) Erfinder: Borchers, Ingo Udo, Dr.-Ing., 88960 Uhldingen (DE); Bartels, Peter, 88090 Immenstaad (DE)
(74) Vertreter: Meel, Thomas

(57) **Zusammenfassung**

Die Erfindung betrifft ein Verfahren zur Lärmminderung schallführender Medien in Rohrleitungen (10) durch Erzeugung von Gegenschall, wobei der Gegenschall durch eine oder mehrere Segmente der Rohrwandung erzeugt wird, und die Segmente aus piezoelektrischen Folien (1) bestehen, die zur Gegenschallerzeugung mittels einer Kontrolleinheit angesteuert werden.

## Beschreibung

Die Erfindung betrifft ein Verfahren zur Lärmminderung schallführender Medien in Rohrleitungen nach dem Oberbegriff des Patentanspruchs 1.

Zur Lärmminderung in Rohrleitungen sind passive Maßnahmen für mittlere bis hohe Frequenzen seit längerem bekannt. In den letzten Jahren sind darüberhinaus auch sogenannte aktive Systeme (ANC: Active Noise Control) bekannt geworden. Dabei wird mittels eines Lautsprechers Gegenschall erzeugt, der dem zu mindernden Schall überlagert wird. Die Erzeugung des Gegenschalls kann so gesteuert werden, daß der zu mindernde Schall stark abgeschwächt oder sogar vollständig ausgelöscht wird.

Nachteilig an diesen aktiven Verfahren ist insbesondere, daß aufgrund der benötigten Lautsprecher das Gesamtsystem ein relativ hohes Gewicht sowie einen großen Platzbedarf aufweist.

Aus der **US 5,355,417** ist ein weiteres aktives System bekannt, bei dem mehrere benachbarte Wand-Segmente des Einlaufs einer Flugzeugturbine durch piezoelektrische Aktuatoren zur Gegenschallerzeugung angeregt werden. Da bei dieser Vorrichtung keine Lautsprecher benötigt werden, wird der Platzbedarf sowie das Gesamtgewicht reduziert.

Nachteilig an dem in der **US 5,355,417** beschriebenen schwingungserzeugenden System aus Aktuatoren und Wand-Segmenten ist insbesondere:
- es kann nur ein relativ enges Frequenzspektrum erzeugt werden;
- hohe Komplexität und damit verbundene Störanfälligkeit;
- schwierige Anpassung an die benachbarten Wandsegmente.

Aufgabe der Erfindung ist es deshalb, ein Verfahren zu schaffen, mit dem die beschriebenen Nachteile überwunden werden.

Diese Aufgabe wird mit dem Verfahren nach Anspruch 1 gelöst. Vorteilhafte Ausführungen sowie eine Vorrichtung zur Durchführung des Verfahrens sind Gegenstand weiterer Ansprüche.

Erfindungsgemäß wird der Gegenschall durch eine oder mehrere Segmente der Rohrwandung erzeugt, wobei diese Segmente als piezoelektrische Folien (englischer Fachausdruck: films) ausgebildet sind, die zur Gegenschallerzeugung von einer Kontrolleinheit angesteuert werden. Gegenüber dem Stand der Technik gemäß 5,355,417 wird somit das Segment der Rohrwandung ohne Zwischenschaltung eines Aktuators unmittelbar angesteuert. Oder anders gesagt: Die piezoelektrische Folie ist sowohl Rohrwandung als auch Aktuator.

Ein Gegenschall erzeugendes Segment im Sinne der Erfindung entspricht genau einer piezoelektrischen Folie. Ein Segment entspricht somit der kleinsten steuerbaren Einheit innerhalb der Rohrwandung. Ein Gegenschall erzeugendes Segment wird im folgenden auch als aktives Segment bezeichnet. Der Bereich der Rohrleitung, an dem der oder die aktiven Segmente zur Gegenschallerzeugung vorhanden sind, wird im folgenden auch als aktive Sektion der Rohrleitung bezeichnet.

Die Ansteuerung der erfindungsgemäßen piezoelektrischen Folien mit Wechselspannung kann über eine geeignete Kontrolleinheit mit auf den jeweiligen Einsatzfall angepaßten Kontroll-Algorithmen unter Einbeziehung von zu minmierenden Empfangssignalen (Mikrofon- oder Schwingungssignalen) und falls nötig von weiteren Signalen in Schallquellennähe, den sogenannten Eingangssignalen (Mikrofon- oder Schwingungssignalen) erfolgen.

Die Systeme zur Signalaufnahme und Ansteuerung der schallabgebenden piezoelektrische Folien sind dem Fachmann bekannte handelsübliche Komponenten und werden deshalb nicht näher beschrieben.

Die erfindungsgemäße Vorrichtung ist unempfindlich gegenüber aggressiven Medien und Temperaturen im Bereich zwischen ca. -55° C und bis zu +90° C. Bei Bedarf kann zusätzlich auf die Folie ein Oberflächenschutz aufgebracht werden, z.B in Form einer Beschichtung. Diese kann z.B. nur auf der dem Rohrinnern zugewandten Oberfläche aufgebracht werden. Möglich ist aber auch eine beidseitige Beschichtung.

Die piezoelektrischen Folien der einzelnen Segmente können mit der gleichen Phase angesteuert werden. Möglich ist es aber auch, die Folien abhängig von deren Lage in Umfangsrichtung oder Längsrichtung der Rohrleitung mit verschiedenen Phasen anzusteuern, so daß neben ebenen Wellen auch höhere Rohrmode angeregt und damit auch Geräusche höherer Frequenzen gemindert werden können. Die größte Schallgegenleistung wird erzielt, wenn die Segmente mit deren jeweiligen Eigenfrequenz angesteuert werden.

Die schallerzeugenden Segmente können an beliebigen Stellen einer Rohrleitung plaziert werden. Sie können z.B. in eine bestehende Rohrleitung eingefügt werden oder am Ende einer Rohrleitung angeordnet werden.

Das erfindungsgemäße Verfahren ist für beliebige Querschnitte der Rohrleitung geeignet. Besonders vorteilhaft wird die aktive Sektion gerade am Übergang zwischen verschiedenen Querschnitten angeordnet.

Die Erfindung kann in jeder Art von Transportsystemen (z.B. Kraftfahrzeuge, Bahn, Luft- und Raumfahrzeuge) oder stationären Anlagen angewandt werden, bei denen die Minderung rohrgeführten Lärms hinsichtlich Gewicht, Strömungswiderstand und Platzbedarf ein Problem darstellt. Ein bevorzugtes Anwendungsgebiet sind dabei Leitungssysteme für die Luftführung in Klimaanlagen. Ein weiteres Anwendungsgebiet sind Leitungssysteme für die Kühlluft elektrischer und elektronischer Anlagen.

Die maximale Pegelhöhe der Gegenschallerzeugung ist von den Segmentabmessungen und deren Ausführung abhängig. Mit den gegenwärtig erhältlichen Folien kann die Erfindung besonders effektiv bei Pegelhöhen bis zu 120 dB eingesetzt werden.

Gegenüber den bekannten Verfahren zur aktiven Lärmminderung, insbesondere der US 5,355,417, weist die Erfindung folgende Vorteile auf:
- Platz- und Raumbedarf für die aktive Schallreduzierung wird weiter vermindert;
- es kann ein sehr breitbandiges Gegenschallspektrum erzeugt werden, so daß selbst bei schwierig zu mindernden Breitbandgeräuschen eine verbesserte Schallreduzierung erreicht werden kann;
- eine Anpassung an die benachbarten Segmente der Rohrwandung wird vereinfacht;
- das erfindungsgemäße System zur Gegenschallerzeugung weist eine geringe Komplexität verglichen z.B. mit einem System nach der **US 5,355,417** auf, was zu einer verringerten Störanfälligkeit sowie zu einem geringeren Aufwand hinsichtlich der Ansteuerelektronik führt.

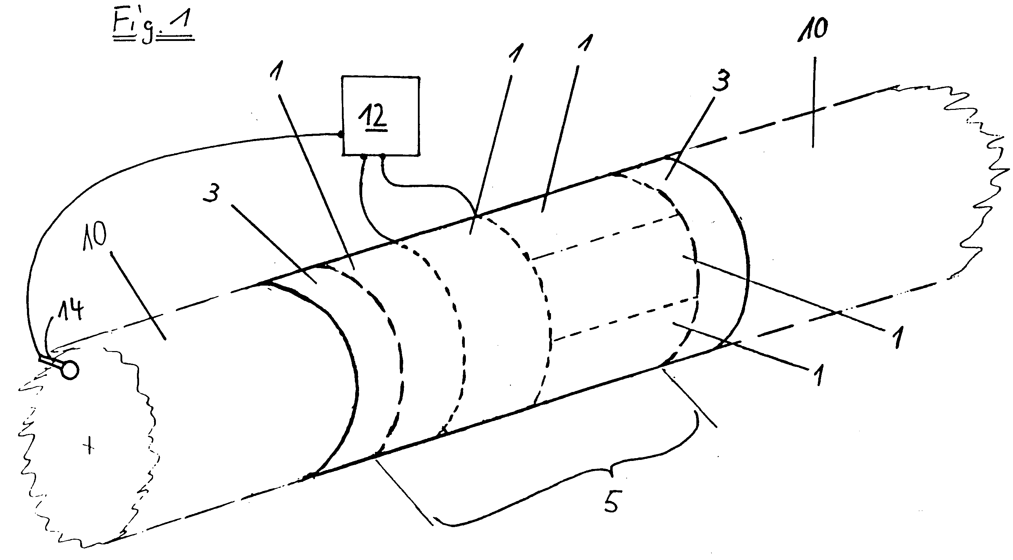

Nachfolgend wird die Erfindung anhand von skizzierten, typischen Ausführungsbeispielen der Erfindung gemäß Fig. 1 bis 3 erläutert. Jedes der in den Fig. 1 bis 3 dargestellten Ausführungsbeispiele weist die folgenden Merkmale auf:
- Aktive Sektion 5 der Rohrleitung 10, bestehend aus einem oder aus mehreren in Umfangs- und/oder Längsrichtung angeordneten Segmenten aus piezoelektrischen Folien 1, die auf den Anwendungsfall abgestimmte Eigenresonanzen aufweisen.
- vorteilhaft können zusätzlich Randanschlußsegmente 3 vorhanden sein, die beidseits oder nur auf einer Seite der aktiven Sektion 5 vorhanden sind. Diese haben den Zweck, einen Übergang in der Schallimpedanz zwischen den Segmenten 1 der aktiven Sektion 5 und den übrigen Bereichen der Rohrleitung 10 zu schaffen, insbesondere Impedanzsprünge zu vermeiden.

Allgemein gilt, daß zur Erreichung der erfindungsgemäßen Vorteile die Anzahl sowie das Material der piezoelektrischen Folien 1 abhängig vom Anwendungsfall unterschiedlich sein kann.

Die piezoelektrischen Folien 1 weisen in typischen Ausführungen der Erfindung Breiten von 250 mm und Längen bis über 200 m auf. Die Foliendicke liegt bevorzugt im Bereich zwischen ca. 0,01 mm bis 1 mm.

Als bevorzugtes Material für die zum erfindungsgemäßen Einsatz vorgesehenen piezoelektrischen Folien wird Polyvinylidendifluorid (PVDF) eingesetzt. Die Foliendicke liegt hierbei derzeit zwischen 0,04 mm bis 0,2 mm, bei einer Breite bis zu 300 mm und bei einer Länge bis zu mehreren 100 m. Im Bedarfsfall notige Sonderausführungen z.B. mit größerer Dicke und/oder mit Spezialschaltungen zur Leistungsverstärkung sind darüberhinaus möglich.

Auf die piezoelektrischen Folien können geeignete Schutzmaterialien aufgebracht werden. Bevorzugte Materialien hierfür sind z.B. Kunststoff (wie PP, PE, PS), Kunstharz (insbesondere faserverstärkt), dünnwandiges Metall (insbesondere Blech), Elastomere (wie Kautschuk, Perbunan, Silikon), unterschiedlich verdichteter Schaum. Zum Erzielen gewünschter Eigenfrequenzen sind auch Kombinationen daraus möglich. Auswahlkriterien für das Material der aktiven Segmente sind neben deren akustischen Eigenschaften die chemische Zusammensetzung und die Temperatur des im allgemeinen gasförmigen Mediums innerhalb der Rohrleitung.

Damit die aktiven Segmente 1 mit gewünschten Frequenzen und Amplituden schwingen und damit Schall in das Rohr einstrahlen können, sind definierte Rand-Einspann- und/oder Anschlußverhältnisse zu benachbarten Segmenten sowie ggf. zum Randanschlußelement 3 nötig. Auch hierfür können die obengenannten, im Zusammenhang mit den aktiven Segmenten genannten Materialien bei gleichen Auswahlkriterien eingesetzt werden.

Fig. 1 zeigt ein Ausführungsbeispiel mit einem zylindrischen Querschnitt für die Rohrleitung 10. Beidseits der Randsegmente 3 ist die ungeänderte, bestehende Rohrleitung 10 angedeutet, in welches die aktive Sektion 5 zur Minderung des rohrgeführten Innenlärms eingesetzt ist. Zu erkennen ist, daß in der dargestellten Ausführung die aktive Sektion 5 zwei ringförmigen Segmenten 1 umfaßt, sowie weitere Segmente 1, die parallel zueinander entlang der Umfangslinie der Rohrleitung 10 angeordnet sind. Die Segmente 1 weisen bestimmte, auf den jeweiligen Anwendungsfall abgestimmte Eigenfrequenzen auf. Die einzelnen Segmente 1 können dabei insbesondere unterschiedliche Eigenfrequenzen aufweisen. Werden die Segmente 1 gerade mit ihrer jeweiligen Eigenfrequenz angeregt, so wird die größte Gegenschallleistung erzielt.
Beispielhaft eingezeichnet ist eine sogenannte Rückwärts-Regelung (feed-back control). Dabei wird mit einem Mikrofon 14 der zu minimierenden Schall innerhalb der Rohrleitung 10 erfaßt. Das Mikrofonsignal wird an die Kontrolleinheit 12 weiterleitet. Auf der Basis des Eingangssignals erzeugt die Kontrolleinheit 12 Signale zur Ansteuerung der einzelnen Segmente 1. Die Leitungen für die Ansteuerung eines der Segmente ist beispielhaft eingezeichnet. Mit dem erzeugten Gegenschall kann der Schall im Medium innerhalb der Rohrleitung gezielt reduziert werden.

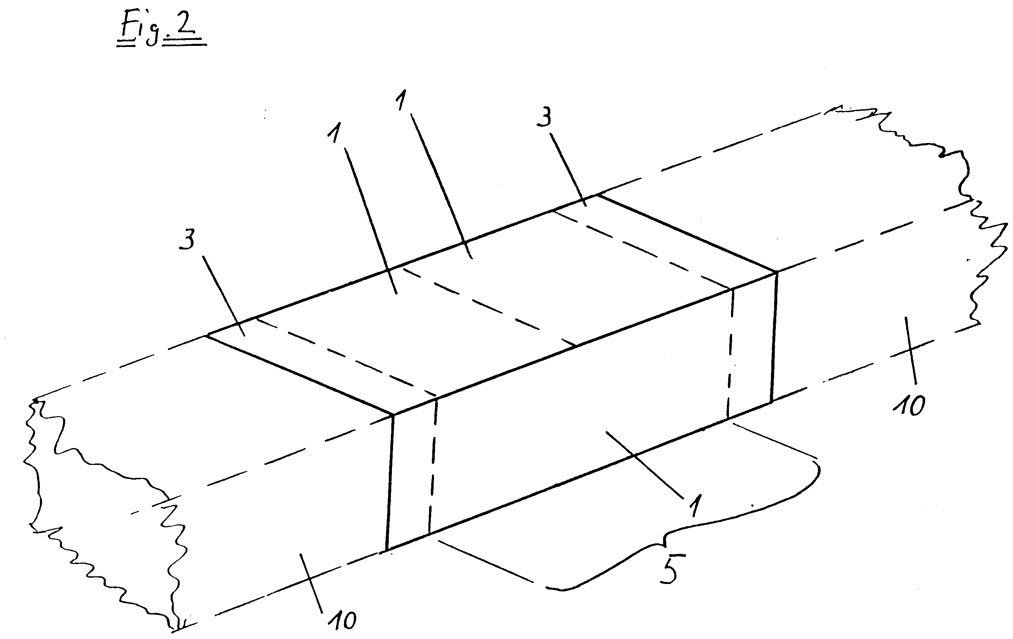

In Fig. 2 ist das Beispiel einer rechteckigen, aktiven Rohrsektion 5 skizziert, die ähnlich wie die in Fig. 1 beschriebene zylindrische Sektion ohne Querschnittsänderung in einen ungeänderten, bestehenden Leitungsstrang 10 integriert ist. Zu erkennen sind zwei Seiten der aktiven Rohrsektion 5, wovon in dieser Ausführung die Schmalseite ein einzelnes Segment 1 aufweist. Die obere, breitere Seite der aktiven Sektion 5 weist zwei Segmente 1 auf.

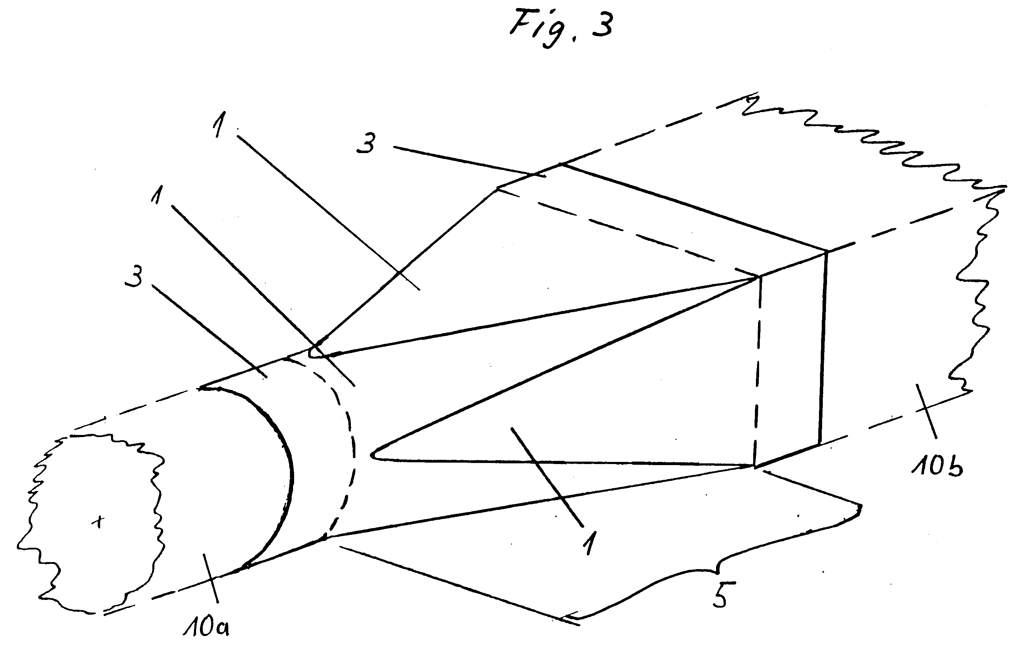

Fig. 3 zeigt als weitere Beispielskizze eine Ausführung, bei der die aktive Rohrsektion 5 ein konisches Übergangsstück von einem zylindrischen 10a auf einen rechteckigen 10b Rohrquerschnitt bildet.
Die aktive Rohrsektion 5 besteht in diesem Fall aus acht dreieckförmigen aktiven Segmenten 1 mit drei unterschiedlichen Geometrien und Abmessungen (vier gekrümmte gleicher Art, vier ebene jeweils zwei davon gleich).

Diese Vielfalt an im Bedarfsfall noch weiter unterteilbaren aktiven Segmenten bietet Möglichkeiten zu einer breitbandigen Gegenschallerzeugung.

## Patentansprüche

1. Verfahren zur Lärmminderung schallführender Medien in Rohrleitungen (10) durch Erzeugung von Gegenschall, wobei der Gegenschall durch eine oder mehrere Segmente der Rohrwandung erzeugt wird, **dadurch gekennzeichnet**, daß die Segmente aus piezoelektrischen Folien (1) bestehen, die zur Gegenschallerzeugung mittels einer Kontrolleinheit (12) angesteuert werden.

2. Verfahren nach Anspruch 1, **dadurch gekennzeichnet**, daß die piezoelektrischen Folien (1) mit der gleichen Phase angesteuert werden.

3. Verfahren nach Anspruch 1 oder 2, **dadurch gekennzeichnet**, daß die piezoelektrischen Folien (1) bevorzugt mit ihrer Eigenfrequenz angesteuert werden.

4. Verfahren nach einem der vorangehenden Ansprüche, **dadurch gekennzeichnet**, daß die piezoelektrischen Folien (1) abhängig von deren Lage in Umfangsrichtung oder Längsrichtung der Rohrleitung (10) mit verschiedenen Phasen angesteuert werden.

5. Vorrichtung zur Lärmminderung schallführender Medien in Rohrleitungen (10) durch Erzeugung von Gegenschall, wobei eine oder mehrere Gegenschal erzeugende Segmente, die einen Abschnitt der Rohrwandung bilden, vorhanden sind, **dadurch gekennzeichnet**, daß die Gegenschall erzeugenden Segmente der Rohrwandung aus piezoelektrischen Folien (1) bestehen, und eine Kontrolleinheit (12) vorhanden ist, mit der die piezoelektrischen Folien (1) zur Gegenschallerzeugung angesteuert werden.

6. Vorrichtung nach Anspruch 5, **dadurch gekennzeichnet**, daß die piezoelektrischen Folien (1) aus Polyvinylidendifluorid bestehen.

7. Vorrichtung nach Anspruch 5 oder 6, **dadurch gekennzeichnet**, daß die piezoelektrischen Folien (1) mit einem Schutzmaterial überzogen sind.
